# EUROPEAN PATENT SPECIFICATION

(11) **EP 4 096 286 B1**
(45) Date of publication and mention of the grant of the patent: **24.06.2026**
(21) Application number: 20919973.6
(22) Date of filing: 21.02.2020
(51) Int. Cl.: H04W 28/02, H04W 72/20

(54) **SIGNAL TRANSMISSION METHOD AND APPARATUS**
SIGNALÜBERTRAGUNGSVERFAHREN UND -VORRICHTUNG
PROCÉDÉ ET APPAREIL DE TRANSMISSION DE SIGNAL

(43) Date of publication of application: 30.11.2022
(73) Proprietor: Huawei Technologies Co., Ltd., Shenzhen, Guangdong 518129, (CN)
(72) Inventor: ZHANG, Jiayin, Shenzhen, Guangdong 518129 (CN); FAN, Weiwei, Shenzhen, Guangdong 518129 (CN); JIA, Qiong, Shenzhen, Guangdong 518129 (CN)
(74) Representative: Isarpatent
(86) International application number: PCT/CN2020/076284
(87) International publication number: WO 2021/164035

(56) References cited:
- WO-A1-2018/045586
- WO-A1-2019/051804
- WO-A1-2019/160741
- CN-A- 104 247 498
- CN-A- 105 101 435
- CN-A- 109 219 005
- US-A1- 2019 104 547
- US-A1- 2019 230 706
- US-A1- 2019 297 603
- HUAWEI ET AL: "HARQ enhancements in NR unlicensed", 3GPP DRAFT; R1-1812196, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 16 November 2018 (2018-11-16), Mobile Competence Centre ; 650, route des Lucioles ; F-06921 Sophia-Antipolis Cedex ; France, pages 1 - 13, XP051478352

## Description

### TECHNICAL FIELD

This disclosure relates to the field of communication technologies, and the invention in particular, relates to signal transmission methods and a communication apparatus.

### BACKGROUND

A wireless communication technology deployed on unlicensed spectrums generally uses or shares spectrum resources through contention. Generally, before sending a signal, a station first listens to whether an unlicensed spectrum is idle, for example, determines, based on a receive power on the unlicensed spectrum, whether the unlicensed spectrum is idle. If the receive power is less than a specific threshold, it is considered that the unlicensed spectrum is in the idle state, and the signal can be sent on the unlicensed spectrum; otherwise, the signal is not sent. This mechanism is referred to as carrier sense multiple access with collision avoidance (Carrier Sense Multiple Access with Collision Avoid, CSMA/CA for short) or listen before talk (Listen Before Talk, LBT for short).

In a 3rd generation partnership project (3GPP) system (for example, LAA/eLAA/NRU) and a wireless fidelity (Wi-Fi) system (for example, 802.11a/b/g/n/ac/ax), before performing data transmission, a sending device needs to ensure, by using a random backoff-based channel listening mechanism, that a channel occupancy time (COT) can be obtained only after a channel is idle. When signal transmission is performed within the time, random backoff listening does not need to be performed again. The random backoff mechanism ensures fairness between nodes using unlicensed frequency bands.

Currently, in the 3GPP system, limited by a system implementation framework, a receive end cannot send a signal to a transmit end in a short time interval to implement bidirectional handshake. In addition, compared with a low frequency band, a transmit carrier frequency of a high frequency band channel is high, and channel attenuation is large. To ensure specific coverage, a beamforming technology is usually used to increase a transmit power in a specific direction. Channel listening performed using omnidirectional beams is referred to as omnidirectional LBT, and channel listening performed using directional beams is referred to as directional LBT. In a high-frequency application scenario, if conventional omnidirectional LBT is used at a receive end, an exposed node problem may be caused. To be specific, although the receive end detects interference, an interference direction is not a signal receiving direction, and no severe interference is caused to receiving. Consequently, the omnidirectional LBT at the receive end reduces spatial multiplexing efficiency.

WO 2019/160741 A1 discloses an LBT method and apparatus for a WTRU and gNB. A method may comprise receiving a gNB beam direction schedule and an LBT measurement configuration. The WTRU may switch a receiver so as to receive a beam based on the beam direction schedule and monitor for a DCI. The WTRU may be configured to determine whether there is a transmission for the WTRU and if there is, the transmission may be received. The transmission may be a DCI for an uplink transmission of the WTRU. A WTRU may be configured to receive the gNB beam direction schedule and the LBT measurement configuration at a start of an MCOT.

US 2019/0230706 A1 discloses a base station (BS) in a wireless communication system is provided. The BS comprises a processor configured to determine frequency units within a frequency range for a bandwidth of an operating carrier, wherein a listen-before-talk (LBT) operation is performed over each of the frequency units; and determine, for each of the frequency units, a set of intended spatial transmit (TX) parameters and a set of spatial receiver (RX) parameters of the LBT operation; and determine a subset of the frequency units for a downlink transmission based on the LBT operation performed over each of the frequency units; and a transceiver operably connected to processor, which is configured to transmit, to a user equipment (UE), downlink channels using the bandwidth corresponding to the determined subset of the frequency units. Additionally, US 2019/104547 A1 discloses improvements to asynchronous spatial listen before talk (LBT) procedures, where in a shared spectrum network spatial LBT procedures are used for directionally targeting the channel reservation process. US 2019/297603 A1 discloses a method of a user equipment (UE) for a beam indication in a wireless communication

### SUMMARY

The invention is defined by the appended claims. Aspects or embodiments of the disclosure which do not fall under the scope of the claims are not included in the scope of invention. The object of the present invention is to provide signal transmission methods and a communication apparatus, so that a signal receiving node indicates, before a network device schedules a signal, a signal sending node to send the signal. This alleviates an exposed node problem. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "... aspect according to an example", "the disclosure describes", or "the disclosure" describe technical teaching which relates to the understanding of the invention or its embodiments, which, however, is not claimed as such.

According to a first aspect according to the invention, a signal transmission method is provided. The method is applied to a network device and includes:
receiving a first control signal from a terminal device, where the first control signal is used by the network device to determine whether to send a first downlink shared signal; and
sending the first downlink shared signal based on the first control signal.

According to the invention, the first control signal includes indication information, where the indication information indicates channel usage of the terminal device, and the channel usage indicates a result of detection performed by the terminal device based on a first spatial receive parameter.

According to the invention, the indication information includes a channel listening result, the channel listening result includes that a channel is idle or busy, and the sending the first downlink shared signal based on the first control signal includes:
sending the first downlink shared signal when the channel is idle.

According to the invention, the indication information includes a channel interference detection result, and the sending the first downlink shared signal based on the first control signal includes: sending the first downlink shared signal when an interference value corresponding to the channel interference detection result is less than a preset threshold.

According to the invention, before the receiving a first control signal from a terminal device, the method further includes: sending a second control signal, where the second control signal is used to indicate a resource for sending the first control signal by the terminal device.

According to the invention, the second control signal further includes a transmission configuration indicator, the transmission configuration indicator is used by the terminal device to determine the first spatial receive parameter, and the first spatial receive parameter is consistent with a spatial receive parameter for sending the first downlink shared signal.

In a possible implementation, the first control signal is a signal sent based on a first periodicity, the first periodicity is a sending interval of the first control signal, and before the receiving a first control signal from a terminal device, the method further includes:
indicating, using upper layer control signaling, a resource for sending the first control signal by the terminal device.

In a possible implementation, the indicating, using upper layer control signaling, a resource for sending the first control signal by the terminal device further includes:
sending a third control signal, and activating, using the third control signal, the resource for sending the first control signal.

In a possible implementation, the upper layer control signaling or the third control signal further includes a transmission configuration indicator, the transmission configuration indicator is used by the terminal device to determine the first spatial receive parameter, and the first spatial receive parameter is consistent with a spatial receive parameter for sending the first downlink shared signal.

In a possible implementation, when the first control signal is the signal sent based on the first periodicity, a signal in each periodicity corresponds to a different first spatial receive parameter.

In a possible implementation, the first control signal is sent through a periodic physical uplink control channel (PUCCH), a semi-persistent scheduling physical uplink shared channel (PUSCH), a grant-free PUSCH, a configured grant PUSCH, a sounding reference signal (SRS), or a physical random access channel (PRACH).

In a possible implementation, when a signal length of the second control signal or the first downlink shared signal is greater than a first preset length, channel listening is performed in a beam direction determined based on a second spatial receive parameter, where a beam width determined based on the second spatial receive parameter is an omnidirectional beam width.

In a possible implementation, when a time interval between the first control signal and the first downlink shared signal is greater than a first preset value, channel listening is performed in a beam direction determined based on a second spatial receive parameter.

According to the invention, before the network device schedules a downlink shared signal, the terminal device prompts the network device to send the signal, so that a direction of channel usage determined by the terminal device before the terminal device receives the downlink shared signal is a direction in which the downlink shared signal is received. This effectively alleviates an exposed node problem of the terminal device (a receiving node).

According to a second aspect according to the invention, another signal transmission method is provided. The method is applied to a network device and includes:
sending a fourth control signal to a terminal device, where the fourth control signal is used to indicate the terminal device to send a first uplink shared signal; and
receiving the first uplink shared signal that is sent by the terminal device based on the fourth control signal.

In a possible implementation, before the sending a fourth control signal, the method further includes:
sending a fifth control signal, where the fifth control signal is used to indicate the terminal device to detect a resource of the fourth control signal.

In a possible implementation, before the sending a fourth control signal to a terminal device, channel detection is performed by using a third spatial receive parameter, where the third spatial receive parameter is a spatial receive parameter of the first uplink shared signal.

In a possible implementation, when a signal length of the fifth control signal is greater than a second preset length, channel listening is performed in a beam direction determined based on a fourth spatial receive parameter, where beam coverage determined based on the fourth spatial receive parameter is greater than beam coverage determined based on the third spatial receive parameter.

In this embodiment of this application, before the network device schedules an uplink shared signal, the network device prompts the terminal device to send the signal, so that a direction in which the network device performs channel listening before receiving the uplink shared signal is a direction in which the uplink shared signal is received. This effectively alleviates an exposed node problem of the network device (a receiving node).

According to a third aspect, a signal transmission method is provided. The method is applied to a terminal device and includes:
performing channel listening, and sending a first control signal to a network device when a channel is idle, where the first control signal is used to indicate the network device to send a first downlink shared signal; and
receiving the first downlink shared signal from the network device.

In a possible implementation, the performing channel listening includes:
performing channel listening in a beam direction determined based on a first spatial receive parameter.

In a possible implementation, the first control signal includes indication information, where the indication information indicates channel usage of the terminal device, and the channel usage indicates a result of detection performed by the terminal device based on the first spatial receive parameter.

According to the invention, before the performing channel listening, and sending a first control signal to a network device when a channel is idle, the method further includes:
receiving a second control signal, and determining, based on the second control signal, a resource for sending the first control signal.

According to the invention, the second control signal further includes a transmission configuration indicator, the transmission configuration indicator is used to determine the first spatial receive parameter, and the first spatial receive parameter is consistent with a spatial receive parameter for receiving the first downlink shared signal.

In a possible implementation, the first control signal is a signal sent based on a first periodicity, the first periodicity is a sending interval of the first control signal, and before the performing channel listening, and sending a first control signal to a network device when a channel is idle, the method further includes:
determining, according to an indication of upper layer control signaling, a resource for sending the first control signal.

In a possible implementation, the determining, according to an indication of upper layer control signaling, a resource for sending the first control signal further includes:
receiving a third control signal, and activating, using the third control signal, the resource for sending the first control signal.

In a possible implementation, the upper layer control signaling or the third control signal further includes a transmission configuration indicator, the transmission configuration indicator is used to determine the first spatial receive parameter, and the first spatial receive parameter is consistent with a spatial receive parameter for receiving the first downlink shared signal.

In a possible implementation, when the first control signal is the signal sent based on the first periodicity, a signal in each periodicity corresponds to a different first spatial receive parameter.

In a possible implementation, a format of the first control signal is a format 0/1.

In a possible implementation, a format of the first control signal is a format 2/3, the format 2/3 is scrambled by using a first scrambling code, and the first scrambling code is used by another terminal device to demodulate the first control signal.

According to a fourth aspect, a signal transmission method is provided. The method is applied to a terminal device and includes:
receiving a fourth control signal sent by a network device, wherein the fourth control signal is used to indicate the terminal device to send a first uplink shared signal; and
sending the first uplink shared signal to the network device based on the fourth control signal.

In a possible implementation, before the receiving a fourth control signal, the method further includes:
receiving a fifth control signal, and determining, based on the fifth control signal, a resource for detecting the fourth control signal.

In a possible implementation, when a signal length of the first uplink shared signal is greater than a second preset length, channel listening is performed in a beam direction determined based on a fourth spatial receive parameter, and the first uplink shared signal is sent when a channel is idle.

In a possible implementation, when a time interval between the fourth control signal and the first uplink shared signal is greater than a second preset value, channel listening is performed in a beam direction determined based on a fourth spatial receive parameter, and the first uplink shared signal is sent when a channel is idle.

According to a fifth not claimed aspect, a network device is provided. The network device includes:
a receiving module, configured to receive a first control signal from a terminal device, where the first control signal is used by the network device to determine whether to send a first downlink shared signal; and
a sending module, configured to send the first downlink shared signal based on the first control signal.

In a possible implementation, the first control signal includes indication information, where the indication information indicates channel usage of the terminal device, and the channel usage indicates a result of detection performed by the terminal device based on a first spatial receive parameter.

In a possible implementation, the indication information includes a channel listening result, the channel listening result includes that a channel is idle or busy, and the sending module is specifically configured to:
send the first downlink shared signal when the channel is idle.

In a possible implementation, the indication information includes a channel interference detection result, and the sending module is specifically configured to:
send the first downlink shared signal when an interference value corresponding to the channel interference detection result is less than a preset threshold.

In a possible implementation, the sending module is further configured to:
send a second control signal, where the second control signal is used to indicate a resource for sending the first control signal by the terminal device.

In a possible implementation, the second control signal further includes a transmission configuration indicator, the transmission configuration indicator is used by the terminal device to determine the first spatial receive parameter, and the first spatial receive parameter is consistent with a spatial receive parameter for sending the first downlink shared signal.

In a possible implementation, the first control signal is a signal sent based on a first periodicity, the first periodicity is a sending interval of the first control signal, and the sending module is further configured to: indicate, using upper layer control signaling, a resource for sending the first control signal by the terminal device.

In a possible implementation, the sending module is further configured to:
send a third control signal, and activate, using the third control signal, the resource for sending the first control signal.

In a possible implementation, the upper layer control signaling or the third control signal further includes a transmission configuration indicator, the transmission configuration indicator is used by the terminal device to determine the first spatial receive parameter, and the first spatial receive parameter is consistent with a spatial receive parameter for sending the first downlink shared signal.

In a possible implementation, when the first control signal is the signal sent based on the first periodicity, a signal in each periodicity corresponds to a different first spatial receive parameter.

In a possible implementation, the first control signal is sent through a periodic physical uplink control channel (PUCCH), a semi-persistent scheduling physical uplink shared channel (PUSCH), a grant-free PUSCH, a configured grant PUSCH, a sounding reference signal (SRS), or a physical random access channel (PRACH).

In a possible implementation, the device further includes a processing module, configured to: when a signal length of the second control signal or the first downlink shared signal is greater than a first preset length, perform channel listening in a beam direction determined based on a second spatial receive parameter, where a beam width determined based on the second spatial receive parameter is an omnidirectional beam width.

In a possible implementation, the processing module is further configured to: when a time interval between the first control signal and the first downlink shared signal is greater than a first preset value, perform channel listening in the beam direction determined based on the second spatial receive parameter.

According to a sixth not claimed aspect, a network device is provided. The network device includes:
a sending module, configured to send a fourth control signal to a terminal device, where the fourth control signal is used to indicate the terminal device to send a first uplink shared signal; and
a receiving module, configured to receive the first uplink shared signal that is sent based on the fourth control signal.

In a possible implementation, the sending module is further configured to:
send a fifth control signal, where the fifth control signal is used to indicate the terminal device to detect a resource of the fourth control signal.

In a possible implementation, the device further includes a processing module, configured to: before sending the fourth control signal to the terminal device, perform channel detection by using a third spatial receive parameter, where the third spatial receive parameter is a spatial receive parameter of the first uplink shared signal.

In a possible implementation, the processing module is further configured to: when a signal length of the second control signal is greater than a first preset length, perform channel listening in a beam direction determined based on a fourth spatial receive parameter, where beam coverage determined based on the fourth spatial receive parameter is greater than beam coverage determined based on the third spatial receive parameter.

According to a seventh not claimed aspect, a terminal device is provided. The device includes:
a processing module, configured to perform channel listening;
a sending module, configured to send a first control signal to a network device when a channel is idle, where the first control signal is used to indicate the network device to send a first downlink shared signal; and
a receiving module, configured to receive the first downlink shared signal from the network device.

In a possible implementation, the processing module is specifically configured to:
perform channel listening in a beam direction determined based on a first spatial receive parameter.

In a possible implementation, the first control signal includes indication information, where the indication information indicates channel usage of the terminal device, and the channel usage indicates a result of detection performed by the terminal device based on the first spatial receive parameter.

In a possible implementation, the receiving module is further configured to:
receive a second control signal, and determine, based on the second control signal, a resource for sending the first control signal.

In a possible implementation, the second control signal further includes a transmission configuration indicator, the transmission configuration indicator is used to determine the first spatial receive parameter, and the first spatial receive parameter is consistent with a spatial receive parameter for receiving the first downlink shared signal.

In a possible implementation, the first control signal is a signal sent based on a first periodicity, the first periodicity is a sending interval of the first control signal, and the receiving module is further configured to:
determine, according to an indication of upper layer control signaling, a resource for sending the first control signal.

In a possible implementation, the receiving module is further configured to:
receive a third control signal, and activate, using the third control signal, the resource for sending the first control signal.

In a possible implementation, the upper layer control signaling or the third control signal further includes a transmission configuration indicator, the transmission configuration indicator is used to determine the first spatial receive parameter, and the first spatial receive parameter is consistent with a spatial receive parameter for receiving the first downlink shared signal.

In a possible implementation, when the first control signal is the signal sent based on the first periodicity, a signal in each periodicity corresponds to a different first spatial receive parameter.

In a possible implementation, a format of the first control signal is a format 0/1.

In a possible implementation, a format of the first control signal is a format 2/3, the format 2/3 is scrambled by using a first scrambling code, and the first scrambling code is used by another terminal device to demodulate the first control signal.

According to an eighth not claimed aspect, a terminal device is provided. The device includes:
a receiving module, configured to receive a fourth control signal sent by a network device, where the fourth control signal is used to indicate the terminal device to send a first uplink shared signal; and
a sending module, configured to send the first uplink shared signal to the network device based on the fourth control signal.

In a possible implementation, the receiving module is further configured to:
receive a fifth control signal, and determine, based on the fifth control signal, a resource for detecting the fourth control signal.

In a possible implementation, the device further includes a processing module, configured to: when a signal length of the first uplink shared signal is greater than a second preset length, perform channel listening in a beam direction determined based on a fourth spatial receive parameter, and send the first uplink shared signal when a channel is idle.

In a possible implementation, when a time interval between the fourth control signal and the first uplink shared signal is greater than a second preset value, channel listening is performed in a beam direction determined based on a fourth spatial receive parameter, and the first uplink shared signal is sent when a channel is idle.

According to a ninth aspect, a communication apparatus is provided. The apparatus includes at least one processor, and the at least one processor is coupled to at least one memory; and
the at least one processor is configured to execute a computer program or instructions stored in the at least one memory, so that the apparatus performs the method according to any one of the first aspect or the second aspect.

According to a tenth aspect according to the invention, a communication apparatus is provided. The apparatus includes at least one processor, and the at least one processor is coupled to at least one memory; and
the at least one processor is configured to execute a computer program or instructions stored in the at least one memory, so that the apparatus performs the method according to any one of the third aspect or the fourth aspect.

According to an eleventh not claimed aspect, an embodiment of this application provides a chip system. The chip system includes: a processor, where the processor is coupled to a memory. The memory is configured to store a program or instructions. When the program or the instructions are executed by the processor, the chip system is enabled to implement the method according to any one of the first aspect or the possible implementations of the first aspect, perform the method according to any one of the second aspect or the possible implementations of the second aspect, perform the method according to any one of the third aspect or the possible implementations of the third aspect, or perform the method according to any one of the fourth aspect or the possible implementations of the fourth aspect.

Optionally, the chip system further includes an interface circuit, and the interface circuit is configured to exchange code instructions with the processor.

Optionally, there may be one or more processors in the chip system, and the processor may be implemented by hardware or may be implemented by software. When being implemented by the hardware, the processor may be a logic circuit, an integrated circuit, or the like. When being implemented by the software, the processor may be a general-purpose processor, and is implemented by reading software code stored in the memory.

Optionally, there may also be one or more memories in the chip system. The memory may be integrated with the processor, or may be separated from the processor. This is not limited in this application. For example, the memory may be a non-transitory memory, for example, a read-only memory (ROM). The memory and the processor may be integrated on a same chip, or may be separately disposed on different chips. A type of the memory and a manner of disposing the memory and the processor are not specifically limited in this application.

According to a twelfth aspect, a readable storage medium is provided. The readable storage medium is configured to store instructions. When the instructions are executed, the method according to any one of the first aspect or the second aspect is implemented, or the method according to any one of the third aspect or the fourth aspect is implemented.

According to a thirteenth not claimed aspect, a computer program product is provided. When a computer reads and executes the computer program product, the computer is enabled to perform the method according to the first aspect or the second aspect, or the computer is enabled to perform the method according to the third aspect or the fourth aspect.

According to a fourteenth aspect, a communication system is provided. The communication system includes the network device according to the fifth aspect and the terminal device according to the sixth aspect, or includes the network device according to the sixth aspect and the terminal device according to the eighth aspect.

In the following description, features which in the above summary of the invention have been marked as "not claimed" or "according to the invention" are also hereinafter, when they are described and explained with reference to the drawings, to be understood as "not claimed" or "not part of the invention" or "according to the invention".

### BRIEF DESCRIPTION OF DRAWINGS

To describe technical solutions in embodiments of this application more clearly, the following briefly describes the accompanying drawings used in describing embodiments.
FIG. 1 is a schematic diagram of a communication system according to an embodiment of this application;
FIG. 2A is a schematic flowchart of a signal transmission method according to an embodiment of this application;
FIG. 2B is a schematic diagram of a process of invoking a downlink shared signal according to an embodiment of this application;
FIG. 2C is a schematic diagram of a communication process based on channel listening performed by a terminal device according to an embodiment of this application;
FIG. 2D is a schematic diagram of periodic signal sending according to an embodiment of this application;
FIG. 2E is another schematic diagram of periodic signal sending according to an embodiment of this application;
FIG. 3A is a schematic flowchart of another signal transmission method according to an embodiment of this application;
FIG. 3B is a schematic diagram of a process of invoking an uplink shared signal according to an embodiment of this application;
FIG. 3C is a schematic diagram of a communication process based on channel listening performed by a network device according to an embodiment of this application;
FIG. 4 is a block diagram of a structure of a network device according to an embodiment of this application;
FIG. 5 is a block diagram of a structure of a terminal device according to an embodiment of this application;
FIG. 6 is a schematic diagram of a structure of a communication apparatus according to an embodiment of this application; and
FIG. 7 is a schematic diagram of a communication system according to an embodiment of this application.

### DESCRIPTION OF EMBODIMENTS

The following describes technical solutions in embodiments of this application with reference to the accompanying drawings in embodiments of this application.

In the specification, the claims, and the accompanying drawings of this application, the terms "first", "second", "third", "fourth", and the like are intended to distinguish between different objects but do not indicate a particular order. In addition, terms such as "including" and "having" and any other variants thereof are intended to cover a non-exclusive inclusion. For example, a process, method, system, product, or device that includes a series of steps or units is not limited to the listed steps or units, but optionally further includes an unlisted step or unit, or optionally further includes another inherent step or unit of the process, method, product, or device.

An "embodiment" mentioned in this specification means that a particular characteristic, structure, or feature described with reference to embodiments may be included in at least one embodiment of this application. The phrase that occurs at various positions in the specification does not necessarily refer to a same embodiment, or an independent or alternative embodiment exclusive of another embodiment. It is explicitly and implicitly understood by a person skilled in the art that embodiments described in the specification may be combined with another embodiment.

"A plurality of" means two or more than two. The term "and/or" describes an association relationship for describing associated objects and represents that three relationships may exist. For example, A and/or B may represent the following three cases: Only A exists, both A and B exist, and only B exists. The character "/" usually represents an "or" relationship between the associated objects.

First, terms used in embodiments of this application are described with reference to the accompanying drawings.

Network device: The network device is an entity that is configured to transmit or receive a signal on a network side, is an information exchange center for mobile communication, and is mainly responsible for managing a terminal device within specific wireless coverage, and completing functions such as radio signal sending or receiving and radio resource management. The network device may be a base station or an access point, or may be a device that is in an access network and that communicates with a wireless terminal via one or more sectors at an air interface. The base station may be configured to mutually convert a received over-the-air frame and a received IP packet and serve as a router between the wireless terminal and a rest portion of the access network, where the rest portion of the access network may include an internet protocol (IP) network. The base station may coordinate attribute management of the air interface. For example, the base station may be a base transceiver station (BTS) in a global system for mobile communications (GSM) or code division multiple access (CDMA), or may be a NodeB (NodeB, NB) in wideband code division multiple access (WCDMA), or may be an evolved NodeB (Evolutional NodeB, eNB or eNodeB) in long term evolution (LTE), a relay station or an access point, a gNB in a 5G network, an IAB node (an integrated access and backhaul base station), or the like. This is not limited herein.

Terminal device: The terminal device is an entity that is configured to receive or transmit a signal on a user side. A behavior of the terminal device is mainly controlled by a network device such as a gNB. For example, sending or receiving of the signal is scheduled by the network device. The terminal device may be a device that provides a user with voice and/or data connectivity, for example, a handheld device having a wireless connection function, or a processing device connected to a wireless modem. The terminal device may communicate with a core network through a radio access network (RAN), and exchange a voice and/or data with the RAN. The terminal device may include user equipment (UE), a wireless terminal device, a mobile terminal device, a device-to-device (D2D) communication terminal device, a vehicle-to-everything (V2X) terminal device, a machine-to-machine/machine-type communications (M2M/MTC) terminal device, an internet of things (IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer having a mobile terminal device, or a portable, pocket-sized, handheld, or computer built-in mobile apparatus. For example, the terminal device is a device such as a personal communications service (PCS) phone, a cordless phone, a session initiation protocol (SIP) phone, a wireless local loop (WLL) station, or a personal digital assistant (PDA). The terminal device further includes a limited device, for example, a device with low power consumption, a device with a limited storage capability, or a device with a limited computing capability. For example, the terminal device includes an information sensing device, for example, a barcode, radio frequency identification (RFID), a sensor, a global positioning system (GPS), or a laser scanner.

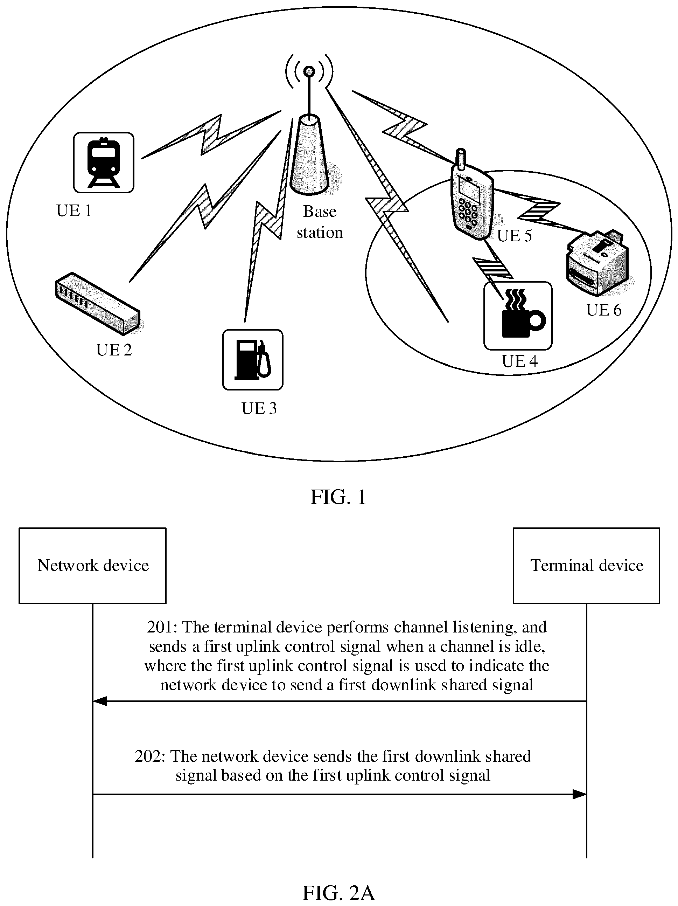

Embodiments of this application are mainly applied to a 5G NR (5G NR in Unlicensed Spectrum, 5G NR-U) system operating on an unlicensed spectrum. FIG. 1 is a schematic diagram of a communication system according to an embodiment of this application. As shown in FIG. 1, the system includes a base station (Base station, BS) and UE 1 to UE 6. In the communication system, the UE 1 to the UE 6 may send uplink data to the base station, and the base station needs to receive the uplink data sent by the UE 1 to the UE 6. In addition, the UE 4 to the UE 6 may also form a communication system. In the communication system, the BS may send downlink information to the UE 1, the UE 2, the UE 5, and the like. The UE 5 may also send downlink information to the UE 4 and the UE 6.

The present invention may also be applied to another communication system, provided that channel state information needs to be exchanged in the communication system, and a sending entity and a receiving entity in the system are configured to exchange the information, to avoid collision during channel listening.

FIG. 2A is a schematic flowchart of a signal transmission method according to an embodiment of this application. As shown in FIG. 2A, the method includes the following steps:
201: A terminal device performs channel listening, and sends a first control signal to a network device when a channel is idle, where the first control signal is used to indicate the network device to send a first downlink shared signal.
202: The network device sends the first downlink shared signal based on the first control signal.

201 is described below.

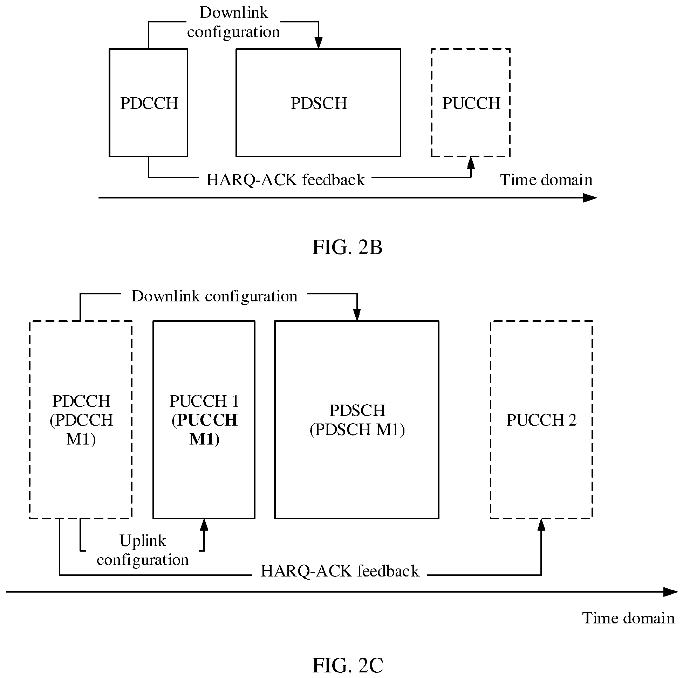

For a process of invoking a downlink shared signal by the network device, refer to FIG. 2B. FIG. 2B is a schematic diagram of the process of invoking a downlink shared signal according to an embodiment of this application. As shown in FIG. 2B, the network device first sends downlink control information (DCI) through a physical downlink control channel (PDCCH), where the DCI may include resource allocation and other control information of the terminal device, for example, control information for receiving a downlink shared signal, and a time-frequency resource for receiving a downlink shared signal. After receiving the DCI, the terminal device receives, at a time-frequency resource position indicated by the DCI, user data sent by the network device through a physical downlink shared channel (PDSCH).

In this embodiment of this application, before the network device sends the user data to the terminal device, the terminal device first sends the first control signal to the network device, to indicate the network device to send the first downlink shared signal. FIG. 2C is a schematic diagram of a communication process based on channel listening performed by a terminal device according to an embodiment of this application. As shown in FIG. 2C, the terminal device first performs channel listening to determine whether the channel is idle. If the channel is idle, a first control signal PUCCH M1 is sent through a physical uplink control channel PUCCH. A PUCCH resource scheduled for sending the PUCCH M1 may be referred to as a PUCCH 1, and a PUCCH resource scheduled for sending another parameter or other information such as a hybrid automatic repeat request (HARQ) signal may be referred to as a PUCCH 2. The PUCCH M1 is used to prompt a receiving node (the network device) of the signal whether to send data. Therefore, the first control signal may be a sending instruction, used to directly indicate the network device to send or not to send a first downlink shared signal PDSCH M1. Alternatively, the first control signal may be some parameter information or indication information, and the network device determines, based on the received parameter information or indication information, whether to send the PDSCH M1.

In some cases, the terminal device needs to perform channel listening, and send the first control signal to the network device when determining that the channel is idle, where the terminal device performs channel listening in a beam direction determined based on a first spatial receive parameter, and the beam direction determined based on the first spatial receive parameter is a direction of a beam within coverage of a directional antenna.

In some cases, the PUCCH M1 sent by the terminal device may include indication information, where the indication information indicates channel usage of the terminal device. The channel usage indicates a result of detection performed by the terminal device based on the first spatial receive parameter. The detection result may include a channel interference value, an interference source, an interference type, or the like. The interference value obtained through detection is compared with a preset threshold, to determine a value relationship between the interference value and a preset energy detection ED (Energy Detection) threshold. The ED may be set based on a modulation and coding scheme (MCS) of the to-be-sent first downlink shared signal. For example, a level of a modulation order of the MCS is inversely proportional to a level of that of the ED. To be specific, a lower modulation order of the MCS may correspond to a higher modulation order of the ED. A correspondence between the MCS and the detection threshold ED may be configured using upper layer signaling or protocol-configured by default. For a specific correspondence, refer to Table 1.

**Table 1**

| MCS | ED |
|---|---|
| mcs0 | -26 dbm |
| mcs1 | -28 dbm |
| mcs2 | -30 dbm |
| mcs3 | -32 dbm |
| ... | ... |

Alternatively, the ED may be set based on a receiving capability (Capability) of the terminal device. For example, the receiving capability of the terminal device is inversely proportional to a level of the ED/an ED value. To be specific, the terminal device may use an ED/an ED value higher than that of another terminal device having a lower receiving capability than that of the terminal device. Alternatively, the ED may be set based on a signal interference value in the indication information. For example, a signal interference value currently detected by the terminal device is less than an interference value carried in a channel state indication (CSI) previously reported by the terminal device. In this case, the ED value may be increased.

Alternatively, the ED may be set based on the interference source or the interference type. For example, an ED threshold used for an interference signal of a non-local cell may be higher than an ED threshold used for an interference signal from another cell.

In some implementations, a comparison between the interference value and the ED may be performed in the terminal device. The terminal device first obtains the ED, where the ED may be standard-predefined; or the ED is configured for the terminal device by the network device using upper layer control signaling, for example, radio resource control (RRC); or the ED is configured for the terminal device by the network device using DCI. Then, the terminal device determines the value relationship between an interference value in an interference detection result and the ED, and generates a sending instruction based on the value relationship. If the interference value ≤ the ED, the generated sending instruction is "send"; otherwise, the generated sending instruction is "not send". The network device determines, based on the received sending instruction, whether to send the first downlink shared signal.

In some implementations, the terminal device obtains a listening result based on the comparison between the interference value and the ED, where the listening result includes that the channel is idle or busy. Similarly, the ED may be standard-predefined, and may be configured using RRC or DCI. If the interference value ≤ the ED, the listening result is that the channel is idle; or if the interference value > the ED, the listening result is that the channel is busy. The indication information included in the PUCCH M1 may be the listening result. If the listening result in the PUCCH M1 is that the channel is idle, it indicates that the network device may send the PDSCH M1; otherwise, the network device does not send the PDSCH M1.

In some implementations, a comparison between the interference value and the ED may alternatively be performed in the network device. The result of detection performed by the terminal device based on the first spatial receive parameter is used as an interference detection result, and then the indication information is sent to the network device using the PUCCH M1. The indication information includes the interference detection result, and the interference detection result includes the interference value. The network device compares the interference value with the ED value, where the ED in the network device may be standard-predefined, or may be dynamically obtained by the network device depending on a communication status. If determining that the interference value ≤ the ED, the network device sends the PDSCH M1 to the terminal device; otherwise, the network device does not send the PDSCH M1.

"≤" indicates less than or equal to, and "equal to" may be included in an upper limit value, or may be included in a lower limit value. In other words, "≤" and "<" may be replaced with each other, and ">" and "≥" may be replaced with each other.

In some implementations, before the terminal device sends the PUCCH M1, the network device sends a second control signal PDCCH M1 through a PDCCH. The second control signal may be used to indicate a resource for sending the PUCCH M1 by the terminal device, including a time domain resource, a frequency domain resource, a codeword resource, or the like. For example, a time-frequency resource of the PUCCH M1 is indicated by indicating a signal start point and transmission duration of the PUCCH, where the transmission duration may be measured in symbols or milliseconds; and a frequency domain resource position of the PUCCH M1 is indicated using a PUCCH resource indication (PRI). The terminal device sends the PUCCH M1 at an indicated time-frequency position. In addition, the PDCCH M1 may further include a transmission configuration indicator (TCI). The terminal device may determine the first spatial receive parameter based on the TCI. After determining the first spatial receive parameter, the terminal device performs signal interference detection (or channel listening) in a beam direction determined based on the spatial receive parameter. After receiving the PUCCH M1, if the network device determines to send the first downlink shared signal, the network device sends the first downlink shared signal in the beam direction determined based on the first spatial receive parameter. In this way, the beam direction in which the terminal device performs channel listening is the same as a beam direction in which the first downlink shared signal is received. In addition, the transmission configuration indicator information may be configured in upper layer signaling RRC. In this case, the network device does not need to send the transmission configuration indicator in the PDCCH M1, to reduce signaling overheads.

Specifically, the transmission configuration indicator is used to indicate that there is a quasi co-location (quasi co-location, QCL) relationship between two received signals. There are the following types of QCL relationships, as shown in Table 2:

**Table 2**

| Type | Feature | Function |
|---|---|---|
| QCL-TypeA | Doppler shift, Doppler spread, average delay, and delay spread | Obtain channel estimation information |
| QCL-TypeB | Doppler shift and Doppler spread | Obtain channel estimation information |
| QCL-TypeC | Doppler shift and average delay | Obtain measurement information such as a reference signal received power |
| QCL-TypeD | Spatial receive parameter | Assist in beamforming of the terminal device |

When the QCL relationship in the transmission configuration indicator is the type D, the QCL relationship is used to indicate two received signals, for example, a signal A and a signal B, indicated in the transmission configuration indicator, and a spatial receive parameter for receiving the signal A is the same as a spatial receive parameter for receiving the signal B. For example, the signal A may be a demodulation reference signal (DMRS) in a PDCCH signal or a DMRS in a synchronization signal block (SSB), or may be a channel state information reference signal (CSI-RS), and the signal B may be a PDSCH signal. The terminal device determines the beam direction based on the spatial receive parameter. In this case, the terminal device performs channel listening in the beam direction, where the beam direction is a direction in which the terminal device receives the downlink shared signal. In this case, the terminal device performs channel listening on a directional beam, and this may be referred to as directional LBT. In a directional LBT process, for a downlink shared signal receiving node (the terminal device), the beam direction in which channel listening or interference detection is performed is a beam direction in which a signal is received, so that signal interference from another non-received signal direction is reduced, and an exposed node problem of the terminal device is effectively alleviated.

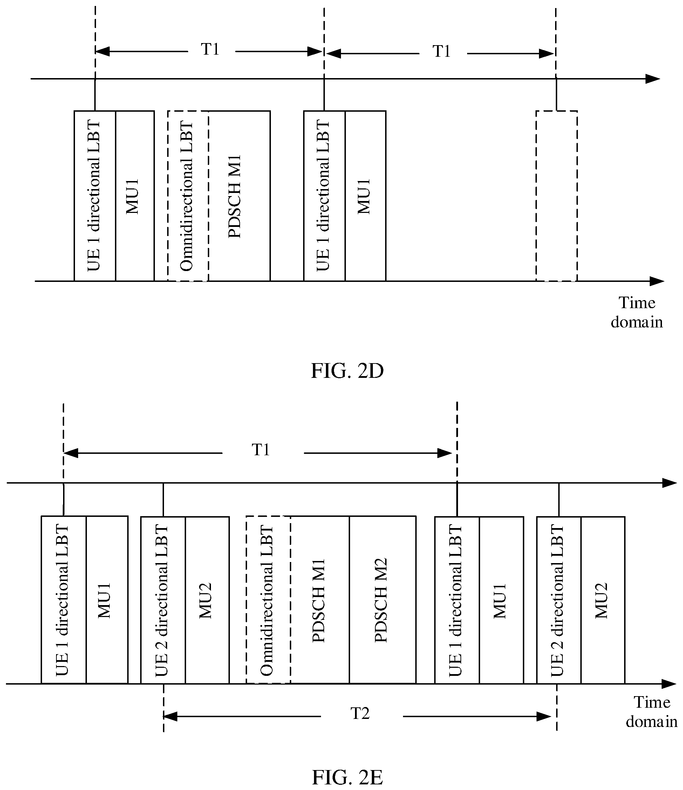

In some implementations, the first control signal may be a periodic signal sent based on a first periodicity. FIG. 2D is a schematic diagram of periodic signal sending according to an embodiment of this application. As shown in FIG. 2D, a terminal device UE 1 sends a first control signal MU1 to the terminal device based on a periodicity T1, and the network device receives the MU1, and determines, based on the MU1, whether to send a first downlink shared signal PDSCH M1. Similarly, before sending the MU1, the terminal device may perform directional LBT, to be specific, perform channel listening in a beam direction determined based on a first spatial receive parameter, and then send a listening result to the network device using the MU1, so that the network device determines, based on the listening result, whether to send the PDSCH M1; or the terminal device performs channel interference detection, and then sends an interference detection result to the network device using the MU1, so that the network device determines, based on a value relationship between an interference value in the interference detection result and an ED, whether to send the PDSCH M1.

In addition, the first control signal is a signal sent based on the first periodicity, that is, the first control signal is a periodic uplink resource, and the periodic uplink resource may be scheduled in two manners. Manner 1, also referred to as a type-1 resource scheduling manner: The network device configures an uplink resource, for example, configuration information such as a periodicity, a frequency domain position, a codeword resource, an MCS, a maximum transmit power, and a transmission configuration indicator (used to determine the first spatial receive parameter) of the uplink resource, for the terminal device using upper layer control signaling, for example, RRC. When receiving the configuration information, the terminal device may perform directional LBT on a corresponding resource, to send first control signal. Manner 2, also referred to as a type-2 resource scheduling manner: Different from the type-1 resource configuration manner, the type-2 resource configuration manner is an RRC+DCI resource scheduling manner. After the network device configures periodic uplink resources for the terminal device, the periodic uplink resources further need to be activated using DCI signaling to take effect. To be specific, after receiving an upper layer control instruction, the network device further needs to receive a third control signal sent by the network device, to activate the uplink resources indicated by the upper layer control instruction. In this case, some signaling such as an MCS sent in RRC is sent by using the third control signal (DCI).

Further, to reduce signaling overheads used by the network device to schedule the first downlink shared signal, the network device may alternatively configure, for the terminal device using upper layer control signaling, for example, RRC, resource configuration information of the first downlink shared signal associated with the first control signal, and the terminal device receives downlink data on a resource of the first downlink shared signal associated with the first control signal.

In some cases, the network device may configure periodic first control signal resources for a plurality of terminal devices. FIG. 2E is another schematic diagram of periodic signal sending according to an embodiment of this application. As shown in FIG. 2E, a terminal device UE 1 sends a first control signal MU1 to the terminal device based on a periodicity T1, and a terminal device UE 2 sends a first control signal MU2 to the terminal device based on a periodicity T2, where T1 and T2 may be the same or different. First spatial receive parameters obtained by the UE 1 and the UE 2 may be the same or may be different. To be specific, the UE 1 and the UE 2 may perform channel listening in a same beam direction, or may perform channel listening in different beam directions.

When the first control signal is a signal sent based on a first periodicity, the first control signal sent by the terminal device may be sent through a periodic PUCCH, a semi-persistent scheduling PUSCH, a grant-free PUSCH, a configured grant PUSCH, a sounding reference signal (SRS), or a physical random access channel (PRACH).

In this embodiment of this application, the terminal device periodically sends the first control signal to the network device, and periodically performs channel listening before the first control signal. Correspondingly, the terminal device may periodically receive a first downlink shared signal. Because the first control signal is scheduled using an upper layer control instruction and a third control signal, in this process, a quantity of times for which the network device needs to send a scheduling signal or signaling to schedule an uplink or downlink resource is reduced, thereby improving communication efficiency.

When the terminal device sends the first control signal through a PUCCH, one or more of the following formats may be used: a PUCCH format 0 or a PUCCH format 1 (format 0/1), and a PUCCH format 2 or a PUCCH format 3 (format 2/3). The format 0/1 is a sequence, represents 1-bit information, and may be used to send a short signal, for example, the sending instruction in the foregoing descriptions, where the instruction indicates only "send" or "not send"; or may be a listening result, and represents "idle" or "busy". The format 2/3 is a multi-bit binary code, and may be used to send a long signal, for example, an interference detection result. In addition, the format 2/3 may further include information such as a remaining channel occupancy time (COT); an offset, a length, and an MCS, where the offset, the length, and the MCS are recommended by the terminal device and are specific to a start point at which a PDSCH signal is sent by the network device to an end point at which a PUCCH signal is sent; and an interference threshold that can be received by the terminal device, to help a base station side adjust a subsequently to-be-sent PDSCH data signal. When the first control signal is sent, other uplink high-priority uplink control information (UCI), for example, a hybrid automatic repeat request acknowledgment (HARQ-ACK) character, may alternatively be carried by using the PUCCH format 2/3.

In addition, in this embodiment of this application, before sending the first control signal by using the format 0/1, the network device may pre-configure, by using upper layer signaling or a protocol, a same time-frequency resource for PUCCHs 1 of different terminal devices that use the format 0/1. In this case, when the terminal device sends the first control signal, another terminal device that has a same time-frequency resource as the first control signal stops sending the signal to the network device within a time period t1 after receiving or detecting the signal, where t1 may alternatively be preconfigured using the upper layer signaling or protocol-preconfigured. Before sending the first control signal using the format 2/3, the network device may preconfigure, using upper layer signaling or a protocol, a same scrambling sequence and a same time-frequency resource for PUCCHs 1 of different terminal devices that use the format 2/3. In this case, when the terminal device sends the first control signal using the format 2/3, another terminal device that has a same scrambling sequence as the first control signal stops sending the signal to the network device within a time period t2 after receiving or detecting the signal, where t2 may be carried in the first control signal.

202 is described below. The network device sends the first downlink shared signal based on the first control signal.

It can be learned from the descriptions in the foregoing embodiment that, after receiving the first control signal, the network device may determine, according to the sending instruction in the first control signal, to send or not to send the first downlink shared signal, or determine, based on the parameter information or the indication information in the first control signal, to send or not to send the first downlink shared signal. That is, the network device schedules the first downlink shared signal once based on each first control signal. A spatial receive parameter used by the terminal device to receive the first downlink shared signal is the same as a spatial receive parameter used by the terminal device to perform channel listening or channel interference detection, and both are first spatial receive parameters. When the first control signal is a signal sent based on the first periodicity, the network device may also schedule the first downlink shared signal based on the first periodicity, or may randomly schedule the first downlink shared signal in a dynamic manner. The terminal device performs, based on the first periodicity, channel listening or channel interference detection in the beam direction determined based on the first spatial receive parameter. Signals in all periodicities may correspond to a same first spatial receive parameter or different first spatial receive parameters. In this case, the beam direction determined based on the first spatial receive parameter may be a fixed beam direction, or may be a variable beam direction, for example, may be one or more beam directions in which strength of a signal received by the terminal device from the network device is maximum.

In some implementations, before sending the first downlink shared signal, the network device may also perform channel listening to ensure that a channel meets a signal sending condition, that is, perform channel listening in a beam direction determined based on a second spatial receive parameter, where a beam width determined based on the second spatial receive parameter is an omnidirectional beam width. In this case, performing channel listening in the beam direction determined by the second spatial receive parameter is omnidirectional LBT. However, in some cases, for example, when an interval between an end point of the first control signal and a start point of the first downlink shared signal is less than a first preset value, omnidirectional LBT may not be performed before the first downlink shared signal is sent, and the signal may be directly sent, where the first preset value may be 16 µs (microsecond), 5 µs, 9 µs, or the like. Alternatively, when a signal length of the first downlink shared signal is less than or equal to a first preset length, where the first preset length may be 500 µs, it indicates that the first downlink shared signal is a short signal, and interference caused by the first downlink shared signal to a channel is low. Therefore, omnidirectional LBT may not be performed, and the signal may be directly sent.

Similarly, omnidirectional LBT may alternatively be performed on a second control signal before the second control signal is sent, and when a signal length of the second control signal is less than or equal to the first preset length, omnidirectional LBT may not be performed, and the second control signal may be directly sent.

In this embodiment of this application, before the network device schedules a downlink shared signal, the terminal device prompts the network device to send the signal, so that a direction of channel usage determined by the terminal device before the terminal device receives the downlink shared signal is a direction in which the downlink shared signal is received. This effectively alleviates an exposed node problem of the terminal device (a receiving node).

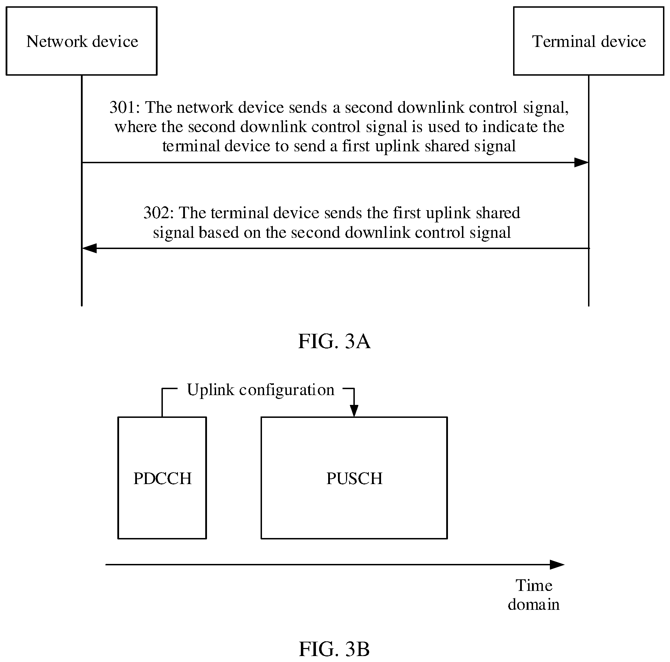

FIG. 3A is a schematic flowchart of another signal transmission method according to an embodiment of this application. As shown in FIG. 3A, the method includes the following steps:
301: A network device sends a fourth control signal to a terminal device, where the fourth control signal is used to indicate the terminal device to send a first uplink shared signal.
302: The terminal device sends the first uplink shared signal based on the fourth control signal.

301 is described below.

In a 3GPP system, for a specific process of invoking an uplink shared signal by the network device, refer to FIG. 3B. FIG. 3B is a schematic diagram of the process of invoking an uplink shared signal according to an embodiment of this application. As shown in FIG. 3B, the network device first sends DCI through a PDCCH, where the DCI may include resource allocation and other control information of the terminal device, for example, control information for sending an uplink shared signal, and a time-frequency resource for sending an uplink shared signal. After receiving the DCI, the terminal device sends the uplink shared signal to the network device through a PUSCH at a corresponding time-frequency position.

Alternatively, the process of invoking the uplink shared signal is performed using upper layer control signaling, and two manners are specifically included. Manner 1: The network device configures an uplink resource, for example, configuration information such as a frequency domain position, a codeword resource, an MCS, and a maximum transmit power of the uplink resource, for the terminal device by using the upper layer control signaling, for example, RRC. When receiving the configuration information, the terminal device may send the uplink shared signal on the corresponding resource. Manner 2: After the network device configures uplink resources for the terminal device, the uplink resources further need to be activated using DCI signaling to take effect. Then, the terminal device sends the uplink shared signal on the corresponding resources. In this case, some signaling such as an MCS sent in RRC is sent by using the DCI.

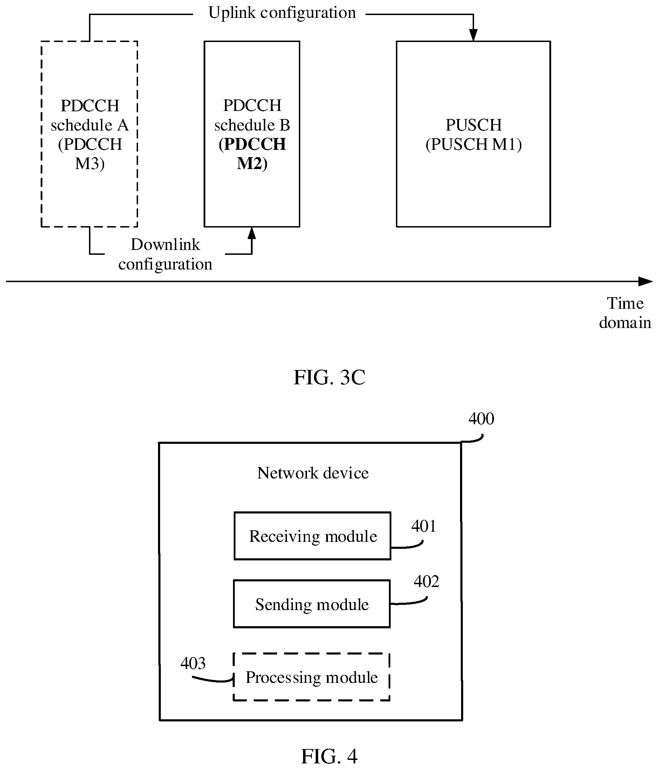

In this embodiment of this application, before the terminal device sends the first uplink shared signal, the network device first sends the fourth control signal to the terminal device, to indicate the terminal device to send the first uplink shared signal. Specifically, refer to FIG. 3C. FIG. 3C is a schematic diagram of a communication process based on channel listening performed by a network device according to an embodiment of this application. As shown in FIG. 3C, a fourth control signal PDCCH M2 is sent to the terminal device through a PDCCH, and a PDCCH resource scheduled for sending the PDCCH M2 may be referred to as PDCCH schedule B, where the PDCCH M2 is used to prompt a node (the terminal device) that receives a signal whether to send data. Therefore, the PDCCH M2 may be a sending instruction used to directly indicate the terminal device to send or not to send a first uplink shared signal PUSCH M1. Alternatively, the PDCCH M2 may be some parameter information or indication information, and the terminal device determines, based on the received parameter information or indication information, whether to send a first downlink shared signal.

In some cases, the PDCCH M2 may include indication information used to indicate a channel listening result of the network device, and the channel listening result includes that a channel is idle or busy. A process of obtaining the channel listening result by the network device is: performing channel interference detection and obtaining an interference detection result, where the interference detection result may include an interference value, a signal interference source, a signal interference type, or the like. The network device compares the interference value with a preset threshold (ED). A setting of the ED may be determined based on an MCS of the first uplink shared signal. For a correspondence between the MCS and the ED, refer to the specific descriptions in the embodiment of step 201 and step 202. Alternatively, a setting of the ED may be determined based on a receiving capability of the network device. For example, a network device with a strong receiving capability may use a higher ED corresponding to that used by a network device with a low receiving capability. If the interference value ≤ the ED, the channel listening result sent by the network device to the terminal device is idle, and the terminal device may send the PUSCH M1 to the network device. If the interference value > the ED, the channel listening result sent by the network device to the terminal device is busy, and the terminal device cannot send the PUSCH M1 to the network device. Alternatively, the ED may be set based on the interference source or the interference type. For example, an ED threshold used for an interference signal of a non-local cell may be higher than an ED threshold used for an interference signal from another cell.

Alternatively, after determining, based on a process of comparing the interference value with the preset threshold (ED), that the interference value is less than or equal to the ED, the network device directly generates the sending instruction "can send"; or after determining that the interference value is greater than the ED, the network device directly generates the sending instruction "cannot send". The terminal device determines, based on the sending instruction, whether to send the PUSCH M1.

In some cases, before sending the PDCCH M2, the network device may further send a fifth control signal PDCCH M3 to the terminal device, and a PDCCH resource scheduled by sending a PDCCH M1 may be referred to as PDCCH schedule A. The PDCCH M3 may be used to indicate the terminal device to detect a resource of the PDCCH M2. The terminal device detects the PDCCH M2 on a time-frequency resource or a code resource indicated by the resource. After receiving the PDCCH M2, if the terminal device determines to send the first uplink shared signal, the terminal device sends the first uplink shared signal in a beam direction determined by a third spatial receive parameter, where the beam direction in which the network device performs channel listening is the same as a beam direction in which the first uplink shared signal is received. Same as the descriptions in the embodiment of step 201 and step 202, this process may be referred to as directional LBT. In a directional LBT process, for an uplink shared signal receiving node (the network device), the beam direction in which channel listening or interference detection is performed is a beam direction in which the signal is received, so that signal interference from another non-received signal direction is reduced, and an exposed node problem of the network device is effectively alleviated.

302 is described below. The terminal device sends the first uplink shared signal based on the fourth control signal.

It can be learned from the descriptions in the foregoing embodiment that, after receiving the fourth control signal, the terminal device may directly determine, based on the sending instruction in the fourth control signal, to send or not to send the first uplink shared signal, or determine, based on the indication information in the fourth control signal, to send or not to send the first uplink shared signal.

In a case, before sending the first uplink shared signal, the terminal device may alternatively perform omnidirectional channel listening to ensure that a signal sending condition is met. However, in some cases, for example, when an interval between an end point of the fourth control signal and a start point of the first uplink shared signal is less than or equal to a second preset value, omnidirectional LBT may not be performed before the first uplink shared signal is sent, and the signal may be directly sent, where the second preset value may be 16 µs (microsecond), 5 µs, or 9 µs. Alternatively, when a signal length of the first uplink shared signal is less than or equal to a second preset length, it indicates that the first uplink shared signal is a short signal, and has a low requirement on channel interference. Therefore, omnidirectional LBT may not be performed and the signal may be directly sent, and the second preset length may be 500 µs.

Similarly, for the fifth control signal, the network device may perform channel listening before sending the fifth control signal to meet the signal sending condition, that is, perform channel listening in a beam direction determined based on a fourth spatial receive parameter, where beam coverage determined based on the fourth spatial receive parameter is greater than beam coverage determined based on the third spatial receive parameter. The beam coverage area determined based on the fourth spatial receive parameter may be omnidirectional beam coverage. In this case, performing channel listening in the beam direction determined based on the fourth spatial receive parameter is omnidirectional LBT. However, when a signal length of the fifth control signal is less than or equal to a first preset length, omnidirectional LBT may not be performed, and the signal may be directly sent.

In this embodiment of this application, before the network device schedules an uplink shared signal, the network device prompts the terminal device to send the signal, so that a direction in which the network device performs channel listening before receiving the uplink shared signal is a direction in which the uplink shared signal is received. This effectively alleviates an exposed node problem of the network device (a receiving node).

FIG. 4 shows a network device 400 according to an embodiment of this application. The network device 400 may be configured to perform the signal transmission methods and specific embodiments of the network device in FIG. 2A to FIG. 2E or FIG. 3A to FIG. 3C. The network device may be a network device or a chip used in the network device. In a possible implementation, as shown in FIG. 4, the network device 400 includes a sending module 401 and a receiving module 402.

The receiving module 401 is configured to receive a first control signal from a terminal device, where the first control signal is used to indicate the network device to send a first downlink shared signal; and
the sending module 402 is configured to send the first downlink shared signal based on the first control signal.

Optionally, the first control signal includes indication information, where the indication information indicates channel usage of the terminal device, and the channel usage indicates a result of detection performed by the terminal device based on a first spatial receive parameter.

Optionally, the indication information includes a channel listening result, the channel listening result includes that a channel is idle or busy, and the sending module 402 is specifically configured to: send the first downlink shared signal when the channel is idle.

Optionally, the indication information includes a channel interference detection result, and the sending module 402 is specifically configured to: send the first downlink shared signal when an interference value corresponding to the channel interference detection result is less than a preset threshold.

Optionally, the sending module 402 is further configured to: send a second control signal, where the second control signal is used to indicate a resource for sending the first control signal by the terminal device.

Optionally, the first control signal is a signal sent based on a first periodicity, the first periodicity is a sending interval of the first control signal, and the sending module 402 is further configured to: indicate, using upper layer control signaling, a resource for sending the first control signal by the terminal device.

Optionally, the sending module 402 is further configured to: send a third control signal, and activate, using the third control signal, the resource for sending the first control signal.

Optionally, the device further includes a processing module 403, configured to: when a signal length of the second control signal or the first downlink shared signal is greater than a first preset length, perform channel listening in a beam direction determined based on a second spatial receive parameter, where a beam width determined based on the second spatial receive parameter is an omnidirectional beam width.

Optionally, the processing module 403 is further configured to: when a time interval between the first control signal and the first downlink shared signal is greater than a first preset value, perform channel listening in the beam direction determined based on the second spatial receive parameter.

Alternatively, the sending module 402 is configured to send a fourth control signal to a terminal device, where the fourth control signal is used to indicate the terminal device to send a first uplink shared signal; and
the receiving module 401 is configured to receive the first uplink shared signal that is sent based on the fourth control signal.

Optionally, the sending module 402 is further configured to: send a fifth control signal, where the fifth control signal is used to indicate the terminal device to detect a resource of the fourth control signal.

Optionally, the device further includes a processing module 403, configured to: before sending the fourth control signal to the terminal device, perform channel detection by using a third spatial receive parameter, where the third spatial receive parameter is a spatial receive parameter of the first uplink shared signal.

Optionally, the processing module 403 is further configured to: when a signal length of the second control signal is greater than a first preset length, perform channel listening in a beam direction determined based on a fourth spatial receive parameter, where beam coverage determined based on the fourth spatial receive parameter is greater than beam coverage determined based on the third spatial receive parameter.

Optionally, the receiving module 401 and the sending module 402 may be an interface circuit or a transceiver. The receiving module 401 and the sending module 402 may be independent modules, or may be integrated into a transceiver module (not shown in the figure). The transceiver module may implement functions of the receiving module 401 and the sending module 402.

The processing module 403 may be a chip, an encoder, an encoding circuit, or another integrated circuit that can implement the method in this application.

The specific methods and embodiments have been described above, and the network device 400 is configured to perform the signal transmission method corresponding to the network device. Therefore, for specific descriptions of the signal transmission method, and especially functions of the receiving module 401 and the sending module 402, refer to related parts in the corresponding embodiments. Details are not described herein again.

Optionally, the network device 400 may further include a storage module (not shown in the figure). The storage module may be configured to store data and/or signaling. The storage module may be coupled to the processing module 403, or may be coupled to the receiving module 401 or the sending module 402. For example, the processing module 403 may be configured to read the data and/or the signaling in the storage module, so that the signal transmission method in the foregoing method embodiments is performed.

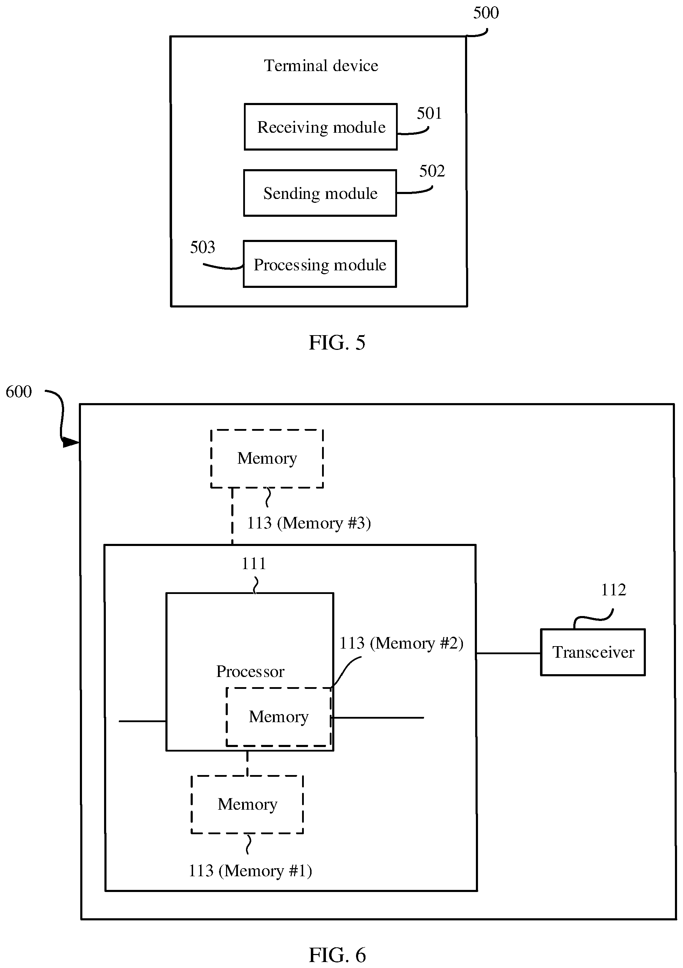

FIG. 5 shows a terminal device 500 according to an embodiment of this application. The terminal device 500 may be configured to perform the signal transmission methods and specific embodiments of the terminal device in FIG. 2A to FIG. 2E or FIG. 3A to FIG. 3C. The terminal device may be a terminal device or a chip that may be configured in the terminal device. In a possible implementation, as shown in FIG. 5, the terminal device 500 includes a receiving module 501, a sending module 502, and a processing module 503.

The processing module 503 is configured to perform channel listening. Specifically, the processing module 503 performs channel listening based on energy of a signal received by the receiving module 501;
the sending module 502 is configured to send a first control signal to a network device when a channel is idle, where the first control signal is used to indicate the network device to send a first downlink shared signal; and
the receiving module 501 is configured to receive the first downlink shared signal from the network device.

Optionally, the processing module 503 is specifically configured to: perform channel listening in a beam direction determined based on a first spatial receive parameter.

Optionally, the receiving module 501 is further configured to: receive a second control signal, and determine, based on the second control signal, a resource for sending the first control signal.

Optionally, the first control signal is a signal sent based on a first periodicity, the first periodicity is a sending interval of the first control signal, and the receiving module 501 is further configured to: determine, according to an indication of upper layer control signaling, a resource for sending the first control signal.

Optionally, the receiving module 501 is further configured to: receive a third control signal, and activate, using the third control signal, the resource for sending the first control signal.

Alternatively, the receiving module 501 is configured to receive a fourth control signal sent by a network device, where the fourth control signal is used to indicate the terminal device to send a first uplink shared signal; and
the sending module 502 is configured to send the first uplink shared signal to the network device based on the fourth control signal.

Optionally, the receiving module 501 is further configured to: receive a fifth control signal, and determine, based on the fifth control signal, a resource for detecting the fourth control signal.

Optionally, the processing module 503 is configured to: when a signal length of the first uplink shared signal is greater than a second preset length, perform channel listening in a beam direction determined based on a fourth spatial receive parameter, and send the first uplink shared signal when a channel is idle.

Optionally, the processing module 503 is configured to: when a time interval between the fourth control signal and the first uplink shared signal is greater than a second preset value, perform channel listening in a beam direction determined based on a fourth spatial receive parameter, and the first uplink shared signal is sent when a channel is idle.

Optionally, the receiving module 501 and the sending module 502 may be an interface circuit or a transceiver. The receiving module 501 and the sending module 502 may be independent modules, or may be integrated into a transceiver module (not shown in the figure). The transceiver module may implement functions of the receiving module 501 and the sending module 502.

Optionally, the processing module 503 may be a chip, an encoder, an encoding circuit, or another integrated circuit that can implement the method in this application.

The specific methods and embodiments have been described above, and the terminal device 500 is configured to perform the signal transmission method corresponding to the terminal device. Therefore, for specific descriptions of the signal transmission method, including functions of the receiving module 501, the sending module 502, and the processing module 503, refer to related parts in the corresponding embodiments. Details are not described herein again.

Optionally, the terminal device 500 may further include a storage module (not shown in the figure). The storage module may be configured to store data and/or signaling. The storage module may be coupled to the processing module 503, or may be coupled to the receiving module 501 or the sending module 502. For example, the processing module 503 may be configured to read the data and/or the signaling in the storage module, so that the signal transmission method in the foregoing method embodiments is performed.

FIG. 6 is a schematic diagram of a hardware structure of a communication apparatus according to an embodiment of this application. For structures of a transmit end device and a receive end device, refer to the structure shown in FIG. 6. The communication apparatus 600 includes a processor 111 and a transceiver 112, where the processor 111 and the transceiver 112 are electrically coupled.

The processor 111 is configured to execute some or all computer program instructions in the memory. When the some or all computer program instructions are executed, the apparatus is enabled to perform the method in any one of the foregoing embodiments.

The transceiver 112 is configured to communicate with another device, for example, receive a first uplink control signal from a terminal device, where the first uplink control signal is used to indicate a network device to send a first downlink shared signal; and send the first downlink shared signal based on the first uplink control signal.

Optionally, the apparatus further includes a memory 113, configured to store computer program instructions. Optionally, the memory 113 (Memory #1) is disposed in the apparatus, the memory 113 (Memory #2) is integrated with the processor 111, or the memory 113 (Memory #3) is disposed outside the apparatus.

It should be understood that the communication apparatus 600 shown in FIG. 6 may be a chip or a circuit. For example, the communication apparatus 600 may be a chip or a circuit that may be disposed in a terminal apparatus or a communication apparatus. Alternatively, the transceiver 112 may be a communication interface. The transceiver includes a receiver and a transmitter. Further, the communication apparatus 600 may further include a bus system.

The processor 111, the memory 113, and the transceiver 112 are connected by using a bus system. The processor 111 is configured to execute the instructions stored in the memory 113, to control the transceiver to receive a signal and send a signal, to complete the steps performed by the first device or the second device in the implementation method in this application. The memory 113 may be integrated into the processor 111, or may be disposed separately from the processor 111.

In an implementation, it may be considered that functions of the transceiver 112 are implemented through a transceiver circuit or a dedicated transceiver chip. It may be considered that the processor 111 may be implemented through a dedicated processing chip, a processing circuit, a processor, or a general-purpose chip. The processor may be a central processing unit (CPU), a network processor (NP), or a combination of a CPU and an NP. The processor may further include a hardware chip or another general-purpose processor. The foregoing hardware chip may be an application-specific integrated circuit (ASIC), a programmable logic device (PLD), or a combination thereof. The PLD may be a complex programmable logic device (CPLD), a field-programmable gate array (FPGA), a generic array logic (GAL) and another programmable logic device, a discrete gate or a transistor logic device, a discrete hardware component, or any combination thereof. The general-purpose processor may be a microprocessor, or the processor may be any conventional processor or the like.

It should be further understood that the memory mentioned in embodiments of this application may be a volatile memory or a non-volatile memory, or may include both a volatile memory and a non-volatile memory. The non-volatile memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (RAM), and is used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory described in this application aims to include but is not limited to these memories and any memory of another proper type.

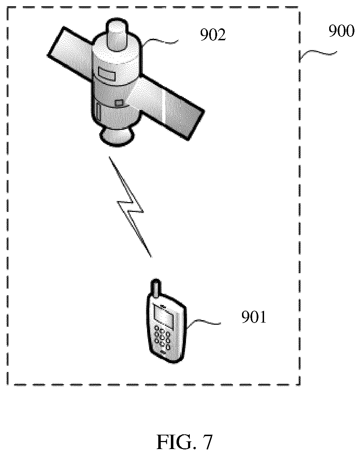

FIG. 7 shows a communication system 900 according to an embodiment of this application. The communication system 900 includes a terminal device 901 and a network device 902. The terminal device 901 may include the terminal device 500 shown in FIG. 5, the network device 902 may include the network device 400 shown in FIG. 4, and hardware structures corresponding to the terminal device 901 and the network device 902 may be the communication apparatus 600 shown in FIG. 6. The communication system 900 may be configured to perform the foregoing communication methods and specific embodiments that are applicable to the foregoing terminal device and network device. For a specific execution process, refer to description content in FIG. 2A to FIG. 2E or FIG. 3A to FIG. 3C.

An embodiment of this application provides a computer storage medium. The computer storage medium stores a computer program, and the computer program includes instructions used to perform the method corresponding to the network device in the foregoing embodiments.

An embodiment of this application provides a computer storage medium. The computer storage medium stores a computer program, and the computer program includes instructions used to perform the method corresponding to the network device in the foregoing embodiments.

An embodiment of this application provides a computer program product including instructions. When the computer program product runs on a computer, the computer is enabled to perform the method corresponding to the terminal device in the foregoing embodiments.

An embodiment of this application provides a computer program product including instructions. When the computer program product runs on a computer, the computer is enabled to perform the method corresponding to the terminal device in the foregoing embodiments.

It should be understood that, in embodiments of this application, sequence numbers of the foregoing processes do not mean execution sequences. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and implementation constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or some of the steps of the methods described in embodiments of this application. The foregoing storage medium includes: any medium that can store program code, such as a USB flash drive, a removable hard disk, a read-only memory (ROM), a random access memory (RAM), a magnetic disk, or an optical disc.

## Claims

1. A signal transmission method, applied to a network device (400, 902), wherein the method comprises:
receiving (201) a first control signal from a terminal device (500, 901), wherein the first control signal is used by the network device (400, 902) to determine whether to send a first downlink shared signal; and
sending (202) the first downlink shared signal based on the first control signal;
wherein the first control signal comprises indication information,
wherein the indication information indicates channel usage of the terminal device (500, 901) and the channel usage indicates a result of detection performed by the terminal device (500 based on a first spatial receive parameter: or
wherein the indication information comprises a channel listening result, the channel listening result comprises that a channel is idle or busy, and the sending the first downlink shared signal based on the first control signal comprises:
sending the first downlink shared signal when the channel is idle; or
wherein the indication information comprises a channel interference detection result, and the sending the first downlink shared signal based on the first control signal comprises:
sending the first downlink shared signal when an interference value corresponding to the channel interference detection result is less than a preset threshold;
wherein before the receiving a first control signal from a terminal device (500, 901), the method further comprises:
sending a second control signal, wherein the second control signal is used to indicate a resource for sending the first control signal by the terminal device (500, 901); and
wherein the second control signal further comprises a transmission configuration indicator, the transmission configuration indicator is used by the terminal device (500, 901) to determine the first spatial receive parameter, and the first spatial receive parameter is consistent with a spatial receive parameter for sending the first downlink shared signal.

2. The method according to claim 1, wherein the first control signal is a signal sent based on a first periodicity, the first periodicity is a sending interval of the first control signal, and before the receiving a first control signal from a terminal device (500, 901), the method further comprises:
indicating, using upper layer control signaling, a resource for sending the first control signal by the terminal device (500, 901).

3. A signal transmission method, applied to a terminal device (500, 901), wherein the method comprises:
performing channel listening, and sending (201) a first control signal to a network device (400, 902) when a channel is idle, wherein the first control signal is used to indicate the network device (400, 902) to send a first downlink shared signal; and
receiving (202) the first downlink shared signal from the network device (400, 902);
wherein the performing channel listening comprises:
performing channel listening in a beam direction determined based on a first spatial receive parameter; and
wherein the first control signal comprises indication information, wherein the indication information indicates channel usage of the terminal device (500, 901), and the channel usage indicates a result of detection performed by the terminal device (500, 901) based on the first spatial receive parameter;
wherein before the performing channel listening, and sending a first control signal to a network device (400, 902) when a channel is idle, the method further comprises:
receiving a second control signal, and determining, based on the second control signal, a resource for sending the first control signal; and
wherein the second control signal further comprises a transmission configuration indicator, the transmission configuration indicator is used to determine the first spatial receive parameter, and the first spatial receive parameter is consistent with a spatial receive parameter for receiving the first downlink shared signal.

4. The method according to claim 3, wherein the first control signal is a signal sent based on a first periodicity, the first periodicity is a sending interval of the first control signal, and before the performing channel listening, and sending a first control signal to a network device (400, 902) when a channel is idle, the method further comprises:
determining, according to an indication of upper layer control signaling, a resource for sending the first control signal.

5. The method according to claim 4, wherein the determining, according to an indication of upper layer control signaling, a resource for sending the first control signal further comprises:
receiving a third control signal, and activating, using the third control signal, the resource for sending the first control signal.

6. A communication apparatus (600), wherein the apparatus comprises at least one processor, and the at least one processor is coupled to at least one memory; and
the at least one processor is configured to execute a computer program or instructions stored in the at least one memory, so that the apparatus is adapted to perform the method according to any one of claims 1 to 2 or claims 3 to 5.

## Patentansprüche

1. Signalübertragungsverfahren, das auf eine Netzwerkvorrichtung (400, 902) angewendet wird, wobei das Verfahren umfasst:
Empfangen (201) eines ersten Steuersignals von einem Endgerät (500, 901), wobei das erste Steuersignal durch die Netzwerkvorrichtung (400, 902) verwendet wird, um zu bestimmen, ob ein erstes gemeinsam genutztes Downlink-Signal zu senden ist; und
Senden (202) des ersten gemeinsam genutzten Downlink-Signals basierend auf dem ersten Steuersignal;
wobei das erste Steuersignal Anzeigeinformation umfasst,
wobei die Anzeigeinformationen eine Kanalverwendung des Endgeräts (500, 901) anzeigen und die Kanalverwendung ein Ergebnis einer Detektion, die durch das Endgerät (500 basierend auf einem ersten räumlichen Empfangsparameter durchgeführt wird, anzeigt: oder
wobei die Anzeigeinformationen ein Kanalabhörergebnis umfassen, das Kanalabhörergebnis umfasst, dass ein Kanal frei oder belegt ist, und das Senden des ersten gemeinsam genutzten Downlink-Signals basierend auf dem ersten Steuersignal umfasst:
Senden des ersten gemeinsam genutzten Downlink-Signals, wenn der Kanal frei ist; oder
wobei die Anzeigeinformationen ein Kanalstörungsdetektionsergebnis umfassen, und das Senden des ersten gemeinsam genutzten Downlink-Signals basierend auf dem ersten Steuersignal umfasst:
Senden des ersten gemeinsam genutzten Downlink-Signals, wenn ein Störungswert, der dem Kanalstörungsdetektionsergebnis entspricht, geringer als eine voreingestellte Schwelle ist;
wobei vor dem Empfangen eines ersten Steuersignals von einem Endgerät (500, 901) das Verfahren ferner umfasst:
Senden eines zweiten Steuersignals, wobei das zweite Steuersignal verwendet wird, um eine Ressource zum Senden des ersten Steuersignals durch das Endgerät (500, 901) anzuzeigen; und
wobei das zweite Steuersignal ferner einen Übertragungskonfigurationsanzeiger umfasst, der Übertragungskonfigurationsanzeiger durch das Endgerät (500, 901) verwendet wird, um den ersten räumlichen Empfangsparameter zu bestimmen, und der erste räumliche Empfangsparameter konsistent mit einem räumlichen Empfangsparameter zum Senden des ersten gemeinsam genutzten Downlink-Signals ist.

2. Verfahren nach Anspruch 1, wobei das erste Steuersignal ein Signal, das basierend auf einer ersten Periodizität gesendet wird, ist, die erste Periodizität ein Sendeintervall des ersten Steuersignals ist, und vor dem Empfangen eines ersten Steuersignals von einem Endgerät (500, 901) das Verfahren ferner umfasst:
Anzeigen, unter Verwendung einer Signalisierung für eine Steuerung einer oberen Schicht, einer Ressource zum Senden des ersten Steuersignals durch das Endgerät (500, 901).

3. Signalübertragungsverfahren, das auf ein Endgerät (500, 901) angewendet wird, wobei das Verfahren umfasst:
Durchführen eines Kanalabhörens und Senden (201) eines ersten Steuersignals an eine Netzwerkvorrichtung (400, 902), wenn ein Kanal frei ist, wobei das erste Steuersignal verwendet wird, um der Netzwerkvorrichtung (400, 902) anzuzeigen, ein erstes gemeinsam genutztes Downlink-Signal zu senden; und
Empfangen (202) des ersten gemeinsam genutzten Downlink-Signals von der Netzwerkvorrichtung (400, 902);
wobei das Durchführen des Kanalabhörens umfasst:
Durchführen des Kanalabhörens in einer Strahlrichtung, die basierend auf einem ersten räumlichen Empfangsparameter bestimmt wird; und
wobei das erste Steuersignal Anzeigeinformationen umfasst, wobei die Anzeigeinformationen die Kanalverwendung des Endgeräts (500, 901) anzeigen, und die Kanalverwendung ein Ergebnis der Detektion, die durch das Endgerät (500, 901) basierend auf dem ersten räumlichen Empfangsparameter durchgeführt wird, anzeigt;
wobei vor dem Durchführen des Kanalabhörens und Senden eines ersten Steuersignals an eine Netzwerkvorrichtung (400, 902), wenn ein Kanal frei ist, das Verfahren ferner umfasst:
Empfangen eines zweiten Steuersignals und Bestimmen, basierend auf dem zweiten Steuersignal, einer Ressource zum Senden des ersten Steuersignals; und
wobei das zweite Steuersignal ferner einen Übertragungskonfigurationsanzeiger umfasst, der Übertragungskonfigurationsanzeiger verwendet wird, um den ersten räumlichen Empfangsparameter zu bestimmen, und der erste räumliche Empfangsparameter konsistent mit einem räumlichen Empfangsparameter zum Empfangen des ersten gemeinsam genutzten Downlink-Signals ist.

4. Verfahren nach Anspruch 3, wobei das erste Steuersignal ein Signal, das basierend auf einer ersten Periodizität gesendet wird, ist, die erste Periodizität ein Sendeintervall des ersten Steuersignals ist, und vor dem Durchführen des Kanalabhörens und Senden eines ersten Steuersignals an eine Netzwerkvorrichtung (400, 902), wenn ein Kanal frei ist, das Verfahren ferner umfasst:
Bestimmen, gemäß einer Anzeige der Signalisierung für die Steuerung der oberen Schicht, einer Ressource zum Senden des ersten Steuersignals.

5. Verfahren nach Anspruch 4, wobei das Bestimmen, gemäß einer Anzeige der Signalisierung für die Steuerung der oberen Schicht, einer Ressource zum Senden des ersten Steuersignals ferner umfasst:
Empfangen eines dritten Steuersignals und Aktivieren, unter Verwendung des dritten Steuersignals, der Ressource zum Senden des ersten Steuersignals.

6. Kommunikationseinrichtung (600), wobei die Einrichtung mindestens einen Prozessor umfasst, und der mindestens eine Prozessor mit mindestens einem Speicher gekoppelt ist; und
der mindestens eine Prozessor konfiguriert ist, um ein Computerprogramm oder Anweisungen, die in dem mindestens einen Speicher gespeichert sind, auszuführen, sodass die Einrichtung angepasst ist, um das Verfahren nach einem der Ansprüche 1 bis 2 oder 3 bis 5 durchzuführen.

## Revendications

1. Procédé de transmission de signal, appliqué à un dispositif réseau (400, 902), dans lequel le procédé comprend :
la réception (201) d'un premier signal de commande en provenance d'un dispositif terminal (500, 901), dans lequel le premier signal de commande est utilisé par le dispositif réseau (400, 902) pour déterminer s'il faut envoyer un premier signal partagé de liaison descendante ; et
l'envoi (202) du premier signal partagé de liaison descendante sur la base du premier signal de commande ;
dans lequel le premier signal de commande comprend des informations d'indication,
dans lequel les informations d'indication indiquent une utilisation de canal du dispositif terminal (500, 901) et l'utilisation de canal indique un résultat d'une détection réalisée par le dispositif terminal (500) sur la base d'un premier paramètre de réception spatiale : ou
dans lequel les informations d'indication comprennent un résultat d'écoute de canal, le résultat d'écoute de canal comprend le fait qu'un canal est inactif ou occupé, et
l'envoi du premier signal partagé de liaison descendante sur la base du premier signal de commande comprend :
l'envoi du premier signal partagé de liaison descendante lorsque le canal est inactif ; ou
dans lequel les informations d'indication comprennent un résultat de détection d'interférence de canal, et l'envoi du premier signal partagé de liaison descendante sur la base du premier signal de commande comprend :
l'envoi du premier signal partagé de liaison descendante lorsqu'une valeur d'interférence correspondant au résultat de détection d'interférence de canal est inférieure à un seuil prédéfini ;
dans lequel, avant la réception d'un premier signal de commande en provenance d'un dispositif terminal (500, 901), le procédé comprend en outre :
l'envoi d'un deuxième signal de commande, dans lequel le deuxième signal de commande est utilisé pour indiquer une ressource pour l'envoi du premier signal de commande par le dispositif terminal (500, 901) ; et
dans lequel le deuxième signal de commande comprend en outre un indicateur de configuration de transmission, l'indicateur de configuration de transmission est utilisé par le dispositif terminal (500, 901) pour déterminer le premier paramètre de réception spatiale, et le premier paramètre de réception spatiale est cohérent avec un paramètre de réception spatiale pour l'envoi du premier signal partagé de liaison descendante.

2. Procédé selon la revendication 1, dans lequel le premier signal de commande est un signal envoyé sur la base d'une première périodicité, la première périodicité est un intervalle d'envoi du premier signal de commande, et avant la réception d'un premier signal de commande en provenance d'un dispositif terminal (500, 901), le procédé comprend en outre :
l'indication, à l'aide d'une signalisation de commande de couche supérieure, d'une ressource pour l'envoi du premier signal de commande par le dispositif terminal (500, 901).

3. Procédé de transmission de signal, appliqué à un dispositif terminal (500, 901), dans lequel le procédé comprend :
la réalisation d'une écoute de canal, et l'envoi (201) d'un premier signal de commande à un dispositif réseau (400, 902) lorsqu'un canal est inactif, dans lequel le premier signal de commande est utilisé pour indiquer au dispositif réseau (400, 902) d'envoyer un premier signal partagé de liaison descendante ; et
la réception (202) du premier signal partagé de liaison descendante en provenance du dispositif réseau (400, 902) ;
dans lequel la réalisation d'une écoute de canal comprend :
la réalisation d'une écoute de canal dans une direction de faisceau déterminée sur la base d'un premier paramètre de réception spatiale ; et
dans lequel le premier signal de commande comprend des informations d'indication, dans lequel les informations d'indication indiquent une utilisation de canal du dispositif terminal (500, 901), et l'utilisation de canal indique un résultat d'une détection réalisée par le dispositif terminal (500, 901) sur la base du premier paramètre de réception spatiale ;
dans lequel, avant la réalisation d'une écoute de canal, et l'envoi d'un premier signal de commande à un dispositif réseau (400, 902) lorsqu'un canal est inactif, le procédé comprend en outre :
la réception d'un deuxième signal de commande et la détermination, sur la base du deuxième signal de commande, d'une ressource pour l'envoi du premier signal de commande ; et
dans lequel le deuxième signal de commande comprend en outre un indicateur de configuration de transmission, l'indicateur de configuration de transmission est utilisé pour déterminer le premier paramètre de réception spatiale, et le premier paramètre de réception spatiale est cohérent avec un paramètre de réception spatiale pour la réception du premier signal partagé de liaison descendante.

4. Procédé selon la revendication 3, dans lequel le premier signal de commande est un signal envoyé sur la base d'une première périodicité, la première périodicité est un intervalle d'envoi du premier signal de commande, et avant la réalisation d'une écoute de canal, et l'envoi d'un premier signal de commande à un dispositif réseau (400, 902) lorsqu'un canal est inactif, le procédé comprend en outre :
la détermination, selon une indication de signalisation de commande de couche supérieure, d'une ressource pour l'envoi du premier signal de commande.

5. Procédé selon la revendication 4, dans lequel la détermination, selon une indication de signalisation de commande de couche supérieure, d'une ressource pour l'envoi du premier signal de commande comprend en outre :
la réception d'un troisième signal de commande, et l'activation, à l'aide du troisième signal de commande, de la ressource pour l'envoi du premier signal de commande.

6. Appareil de communication (600), dans lequel l'appareil comprend au moins un processeur, et l'au moins un processeur est couplé à au moins une mémoire ; et
l'au moins un processeur est configuré pour exécuter un programme informatique ou des instructions stockées dans l'au moins une mémoire, de sorte que l'appareil est adapté pour réaliser le procédé selon l'une quelconque des revendications 1 à 2 ou des revendications 3 à 5.
